Europäisches Patentamt

European Patent Office

Office européen des brevets

(11) Publication number: **0 345 980**
**A2**

## (12) EUROPEAN PATENT APPLICATION

(21) Application number: **89305374.4**

(22) Date of filing: **26.05.89**

(51) Int. Cl.⁴ **G07B 11/00**

(30) Priority: **02.06.88 JP 136360/88**

(43) Date of publication of application:
**13.12.89 Bulletin 89/50**

(84) Designated Contracting States:
**FR GB IT**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yoshida, Hirokazu Intellectual**
**Property Division**
**Toshiba Corporation 1-1, Shibaura 1-chome**
**Minato-ku Tokyo 105(JP)**
Inventor: **Sometani, Mitsuo Intellectual**
**Property Division**
**Toshiba Corporation 1-1, Shibaura 1-chome**
**Minato-ku Tokyo 105(JP)**

(74) Representative: **BATCHELLOR, KIRK & EYLES**
**2 Pear Tree Court Farringdon Road**
**London EC1R 0DS(GB)**

(54) **A portable recording medium on which visible information can be recorded and deleted.**

(57) Apparatus is disclosed for recording and deleting visible information on and from a recording medium having a reversible recording material. A visible information recording section is provided at an entrance of a service system, such as railway and toll road. The visible information recording section records visible information to the recording medium by a thermal printer affecting the reversible recording material of the recording medium. A visual information deleting section is provided at an exit of the service system to delete the visible information previously recorded on the recording medium.

FIG. 5

# A PORTABLE RECORDING MEDIUM ON WHICH VISIBLE INFORMATION CAN BE RECORDED AND DELETED

This invention relates to a portable recording medium on which visible information can be recorded and from which the information can be deleted. The portable medium may take the form of a ticket which gives access to a service system. The invention also relates to apparatus by which the visible information can be recorded on the medium and apparatus by which the visible information can be deleted.

The invention will be described in particular with reference to the use of the recording medium as a ticket for use on a service system but this is not the only application of the recording medium. The service system may be a railway or a road system for which tolls have to be paid.

In a transport system, such as a railway, there are a multiplicity of stations at each of which access may be made to the railway system and at each of which a user may exit from the railway system. It is usual for the user to have a ticket which enables him to undertake a particular journey, but the system is subject to abuse in that if there are, for example stations A, B, C and D arranged successively on a railway line, then an unscrupulous user may take the journey from station A to station D but use two tickets which are valid from station A to station B and from station C to station D, respectively. In other words, the user does not pay for the part of the journey between stations B and C.

In many transport systems, automated ticket barriers are in use whereby data magnetically recorded on the ticket gives the user access through the barriers on to the station when a valid ticket is presented to it and which allows the user to exit from the station when a valid ticket is supplied to it. With such magnetically deposited information on the ticket, there is no visual information as to at least the station from which the journey commenced.

According to the present invention, a portable recording medium which may serve as a ticket which gives access to a service system has at least a part carrying a reversible medium on which visible information can be recorded and from which the information can be deleted.

The visible information can be recorded when the reversible medium is subjected to an elevated temperature and the visible information can be deleted by subjecting the reversible medium to an elevated temperature which is lower than that required to record the visible information.

The recording medium may also include a recording medium for storing data magnetically applied thereto.

When the portable recording medium serves as a ticket for a service system, the system may have multiple points of entry and multiple points of exit and, at each point of entry, apparatus is provided for receiving a ticket of the type referred to above and for visible information to be recorded thereon identifying the point of entry and, at each point of exit, apparatus is provided for receiving such a ticket and deleting the visible information therefrom. The recording means of the apparatus at each point of entry includes means for heating at least the reversible medium on the ticket and the deleting means of the apparatus at each point of exit includes means for heating at least the reversible medium on the ticket but to a temperature which is less than that obtained at the recording means.

The apparatus may include a gate which can be closed to deny a user access to the system but which is opened when a valid ticket is received at the ticket receiving means.

Furthermore, at each point of exit from the service system, a gate which is closed to prevent exit by a user from the system may be provided but which is opened when a valid ticket is received at the ticket receiving means.

With the invention a user entering the service system has a ticket having visibly recorded thereon information which at least identifies the point of entry. An improper use of the ticket by making a journey which includes an intermediate section for which no fare has been paid can readily be detected.

In this specification, the term "ticket" includes a ticket which is used for one journey only, a ticket which can be for a number of journeys, sometimes referred to as a 'season' ticket or pass, and a prepaid ticket, the stored value of which is reduced each time a journey is undertaken.

In order that the invention may be more readily understood, it will now be described, by way of example only, with reference to the accompanying drawings, in which:-

Figure 1 is a perspective view of an automatic ticket gate;

Figure 2 shows schematically the internal mechanism of the ticket gate shown in Figure 1;

Figure 3 is a schematic block diagram showing the electronic circuit according to the present invention;

Figure 4 and Figure 5 are plan views of a ticket or pass with additional visual information shown on Figure 5;

Figure 6 is a sectional view of a ticket in accordance with the present invention;

Figure 7 is a graph showing the relationship between temperature and colour intensity of a heat-sensitive recording layer;

Figure 8 is a plan view of a ticket; and

Figure 9 is a plan view of a pre-paid stored value ticket.

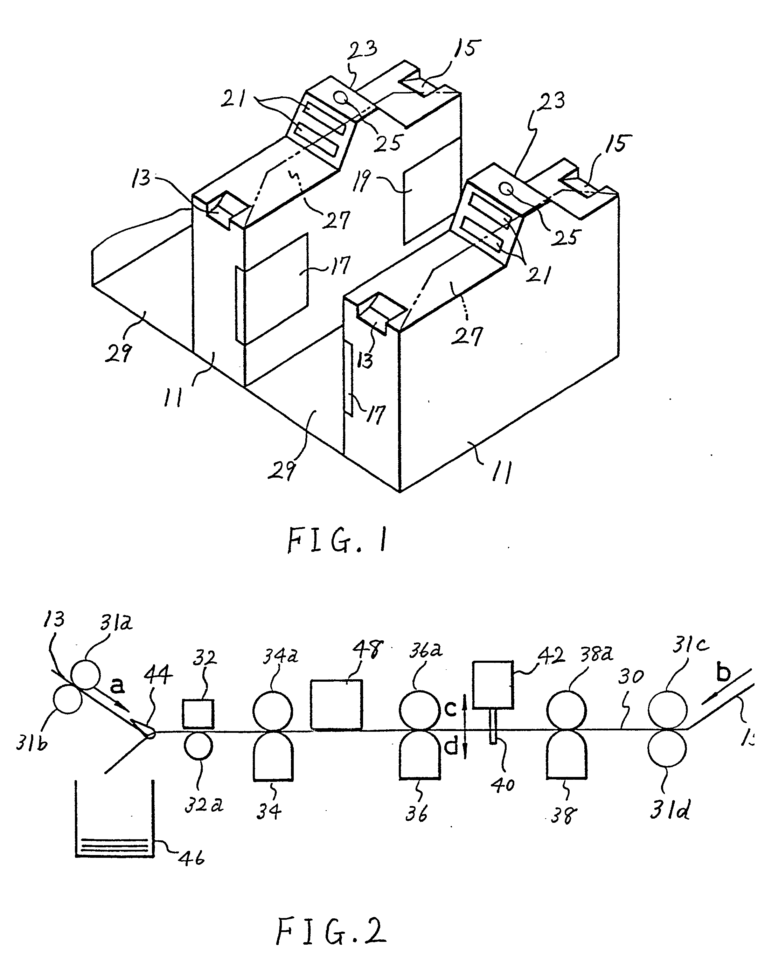

Referring to Figure 1, at a station on a transport system, there are a plurality of automatic ticket gate machines arranged side-by-side and which allow users to gain access to and to exit from the transport system. Each machine has a casing 11 having on its entry side an inlet 13 for receiving a ticket and an inlet 15 for a ticket at its exit side. A movable gate 17 is shown in an ambush position at the entry side and a gate 19 is shown in ambush at the exit side. Information indicators are shown by reference numerals 21 and 23 and 25 is an aperture in the casing behind which there is a loud speaker. Each casing 11 and a partition 27 spaced from it define a passage 29 through which the user has to pass on entering the station and on exiting from the station. On entering the station, the user deposits his ticket, of whatever form it may be, into the inlet 13 and has the ticket returned to him through inlet 15. On exiting from the station, the user places his ticket in the inlet 15 and it may be returned to him at the inlet 13. The gate 17 stops a user from exiting from the passage 29 if the ticket which he has introduced into the inlet 15 is not valid. Similarly, the gate 19 stops a passenger from entering the station if the ticket which he introduced into the inlet 13 is invalid. The indicators 21, 23 may be used to indicate the remaining value of a pre paid stored value ticket. The loud speaker is used to raise an alarm if an invalid ticket is presented and to provide communication with station staff.

Referring to Figure 2, a ticket which is put into the inlet 13 is carried in the direction of arrow a on a route 30 by known transport means, such as carrying rollers 31a, 31b, 32a, 34a, 36a, 38a and 31c and 31d. In a similar manner, a ticket which is inserted in the inlet 15 is carried in the direction of arrow b on the carrying route 30 by the same rollers. On the route 30 from the inlet 13, a printer 32 prints a remaining value on a stored value ticket. A reading head 34 reads magnetic information stored on the ticket. A thermal head 48 records visual data, such as the date and the name of the station, in a thermal recording area on the ticket. A writing head 36 updates the magnetic information on the ticket and a reading head 38 reads out the magnetic information on the ticket. Between the writing head 36 and the reading head 38 a stopper 40 is provided which stops the passage of the ticket when a fare adjustment is needed at the exit. The stopper blocks the route 30 by vertically moving in the direction shown by the arrows c and d by the action of a solenoid 42. A gate 44 is provided on the route 30 between the inlet 13 and the printer 32 and this gate diverts tickets introduced through the inlet 15 either to the inlet 13 or to a collecting box 46.

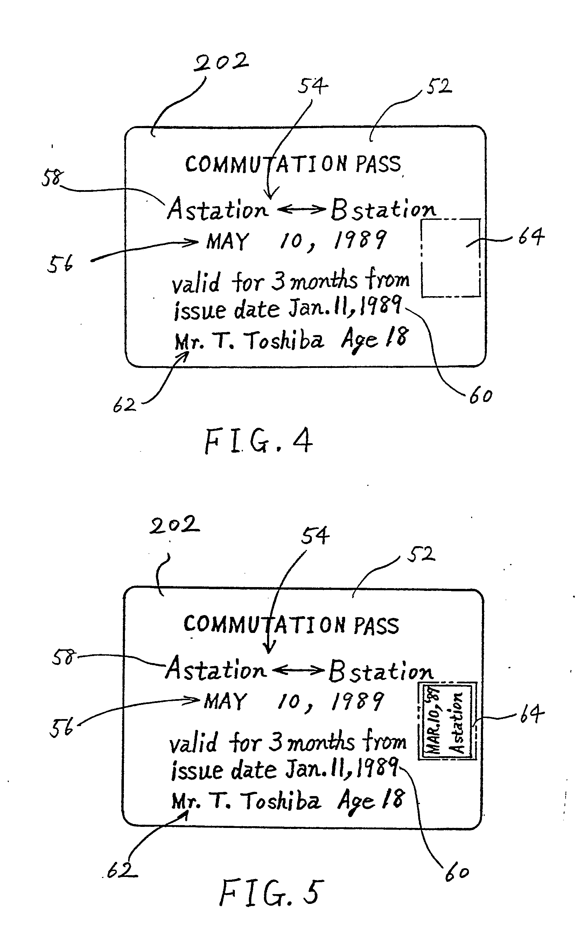

Figures 4 and 5 show the form of a season ticket or commuter pass 202. On a surface 52 of the pass an amount of visible information is permanently provided, such as the stations between which the pass can be used (58), the name, age and sex of the user, and other information. A thermal recording area 64 is provided on the surface 52. On this area 64 the date and data relating to the entry station can be recorded as shown in Figure 5 by the thermal head 48 in the apparatus shown in Figure 2.

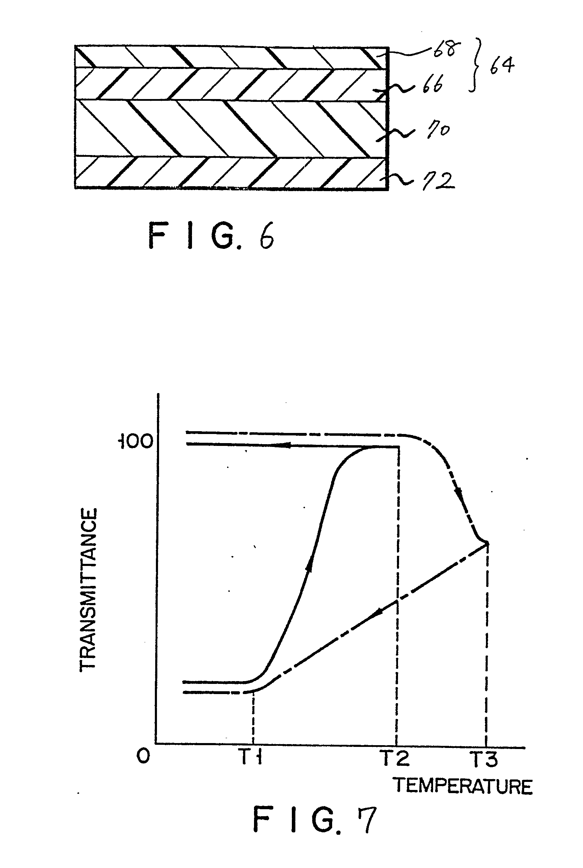

An enlarged section of the thermal recording area 64 is shown in Figure 6. A heat-sensitive body 66 is provided between a substrate 70 and a protecting film 68. A magnetic recording section 72 is provided on the base of the substrate which is the rear side of the commuter pass 202. The heat-sensitive body 66 changes between a visible state and a transparent state depending on the temperature to which it is subjected and each state is stably maintained at lower temperatures.

A relationship between the temperature and the appearance of the heat-sensitive recording layer is shown in Figure 7. When the recording medium is heated from a temperature T1 (ambient temperature) to a temperature T2, as indicated by the solid line, the transmittance of the material increases so that the appearance of the layer becomes substantially transparent and any visual information previously recorded on it is erased. The transparent heat-sensitive recording layer retains the same appearance, even when the temperature is allowed to fall to T1, as indicated by the solid line. However, if the temperature is increased from T2 to T3, as indicated by the chain dot line, the transmittance is reduced giving the appearance of a cloudy state. Thereafter, the transmittance increases as the temperature is decreased down to ambient temperature, as indicated by the broken line. Thus, by heating the layer up to a temperature T3, visual information can be applied to the layer and this information is retained when the temperature of the layer returns to ambient temperature. The heat-sensitive body 66 is shown as being present at the region 64 on the pass. In fact, the heat-sensitive body may be provided on any part of the pass or over the entire surface of the pass. The visual information recorded on the pass may be marks, signs, etc., and the visual information may simply consist of a change between the clouded and transparent state of a recorded area. For easier recognition of the information recorded on the recording area 64, the back-ground of the area may be coloured or a coloured member may be inserted between the heat-sensitive body 66 and the substrate 70. Such a heat-sensitive body is described in Japanese Laid-Open Patent Applications Nos. 57-82087 and 61-258853. The magnetic recording section 72 on the rear of the pass may be used to record data, such as the usage section, usage period, issuing station, entrance station, issuing date, passenger information, etc.

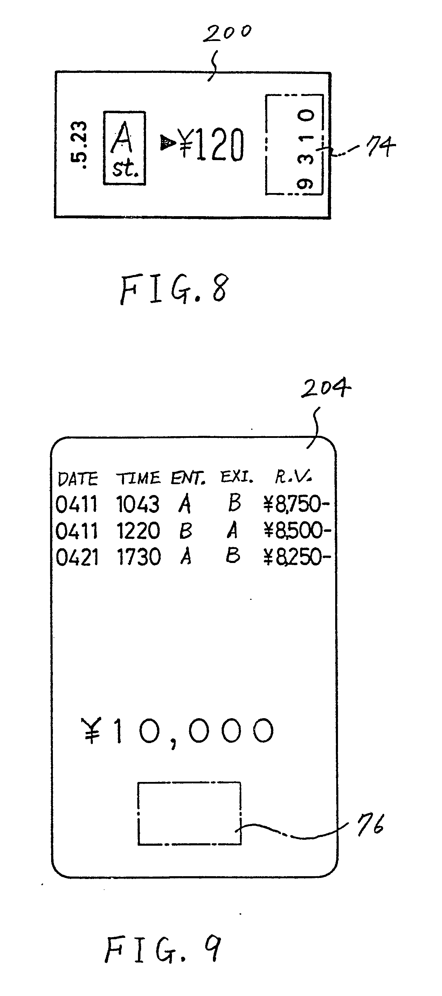

On the front surface of a once and for all ticket 200 and on a pre-paid stored value ticket 204, thermal recording areas 74, 76 are provided as shown in Figures 8 and 9. On these areas a visual record of the date and entering station data may be added. In the case of a pre-paid stored value ticket the whole area of the back part of the ticket may be a thermal recording area and details may be recorded each time the ticket is used.

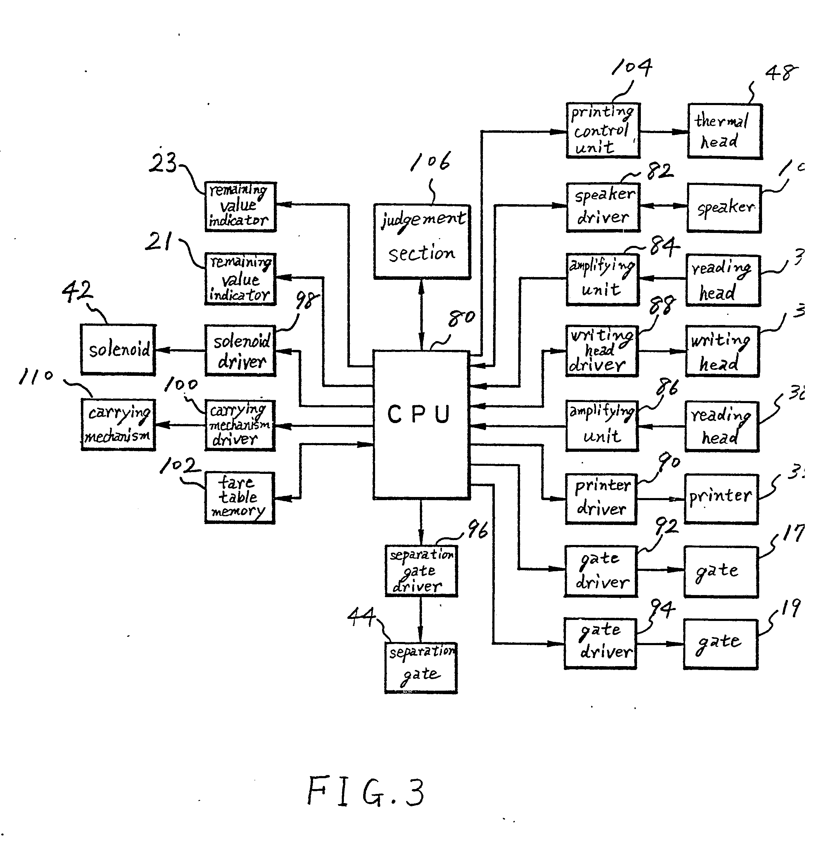

Fig. 3 is a schematic block diagram to show the construction of the essential part of the electric circuit. In Fig. 3, a CPU (Central Processing Unit) 80 is a total controller of this system. The CPU 80 connects to the remaining value indicators 21, 23, a speaker driver 82, amplifying units 84, 86, a writing head driver 88, a printer driver 90, gate drivers 92, 94, a separation gate driver 96, a solenoid driver 98, a carrying mechanism driver 100, a fare table memory 102, a printing control unit 104, and a judgement section 106. The driver 82 drives a speaker 108 to output the signals from the CPU 80 to the speaker 108 and to output the signals from the speaker 108 to the CPU 80. The amplifying units 84, 86 amplify the signals from the reading head 34, 38 respectively. The writing head driver 88 drives the writing head 36 corresponding to the recorded data, such as entrance station, data from the CPU 80. The printer driver 90 drives the printer 32 for printing of the remaining value to the stored value ticket 204. The gate drivers 92, 94 drive the gates 17 and 19, respectively. The separation gate driver 96 drives the separation gate 44. The solenoid driver 98 drives the solenoid 42. The carrying mechanism driver 100 drives a carrying mechanism 110 including the carrying rollers 31a, 31b, 31c, 31d, 32a, 34a, 36a, 38a for carrying of various tickets 200, 202, and 204 in the direction of the arrows (a) or (b) on the carrying route 30, shown in Fig. 2. The fare table memory 102 stores fare data corresponding to various entrance station data supplied from the CPU 80. The printing control unit 104 changes the status of the heat-sensitive body 66 in the thermal recording area 64 of the pass 202 to print the entrance station data by driving the thermal head 48 according to the date and entrance station data supplied from the CPU 80, or to delete the information on the thermal recording area 64 (whole surface) of the pass 202 by driving the thermal head 48 at a temperature higher than that at the printing, above, according to the deletion information supplied from the CPU 80. The judgment section 106 judges the justifiability of each ticket 200, 202, or 204 based on the data including usage period, usage section, entrance station, issuing date, etc. supplied from the CPU 80.

Operation of the present invention with such construction is now explained. First, we explain a case which we enter the automatic ticket gate unit using ticket 200, pass 202 or stored value ticket 204, and the body 11 is used as the automatic ticket gate unit for entrance service. When a ticket 200 is put into the inlet 13 by a passenger, the ticket 200 is carried in the direction of the arrow (a) on the carring route 30, shown in Fig. 2. The contents of the magnetic recording section (magnetic stripe) 72 of the ticket 200, which are issued station, usage station, and usage period (date) data are read by the reading head 34 and supplied to the CPU 80. Then the CPU 80, on the basis of the supplied data including issuing station, section and period, judge if the ticket is valid or not at the judgment section 106. If it is valid, date and entrance station data are thermally printed with the thermal head 48 in the thermal recording area 74, including transparent reversible thermal recording material. Thermal printing changes the reversible thermal recording area 74 from transparent status to visible status for visual printing of date and entrance station data.

The CPU 80 records the entrance station data in the magnetic stripe on the back side of the ticket 200 with the writing head 36. After that, the contents of the magnetic stripe on the ticket 200 is read by the reading head 38 and supplied to the CPU 80. The CPU 80 checks the data recorded in the magnetic stripe to see if they are valid or not. If the data are valid, the gates 17 and 19 are kept open, i.e. permitting the passenger to pass, and the ticket 200 is discharged from the inlet 15. As a result, the passenger passes the passage 29 and receives the ticket 200.

When a pass 202 is put into the inlet 13 by a passenger, the pass 202 is carried on the carrying route 30 in the direction shown by the arrow (a). The contents of the magnetic stripe 72 of the pass 202, i.e. the issuing station data, usage section data, and usage period data are read by the reading head 34, and supplied to the CPU 80. The CPU 80 judges if the ticket is valid from the supplied data which includes issuing station, usage section and usage period. When the ticket is valid, date and entrance station data are visually recorded on the thermal recording area 64 by changing the area from the transparent status to the visible status with the thermal head 48, as shown in Fig.5, and the entrance station data is recorded on the magnetic stripe 72 of the pass 202 with the writing head 36. After that, the data of the magnetic strip 72 of the pass 202 are read by the reading head 38 and supplied to the CPU 80. The CPU 80 checks the data recorded on the magnetic stripe 72 to see if they are varied or not, and when the data are valid, it discharges the pass 202 from the inlet 15 with the gates 17 and 19 kept open, i.e. allowing the passenger to pass. As a result, the passenger passes through the passage 29 and receives the pass 202.

When a stored value ticket 204 is put into the inlet 13 by a passenger, the stored value ticket 204 is carried on the carrying route 30 in the direction shown by the arrow (a). The data of the magnetic stripe 72 of the stored value ticket 204, i.e. the issuing station, usage section, usage period, face value and remaining value data are read by the reading head 34, and supplied to CPU 80. The CPU 80 judges if the ticket is valid or not using the supplied data, which includes issuing station, usage section and usage period. When the ticket is valid, the remaining value is checked to see if it is sufficient for the minimum fare at the remaining value judgment t device on the basis of the face value data and remaining value data. When it is sufficient, date and entrance station data are visibly recorded on a thermal recording area 76 by changing the area from the transparent status to the visible status with the thermal head 48, and the entrance station data is recorded on the magnetic stripe 72 of the stored value ticket 204 with the writing head 36. At this time, the CPU 80 indicates the current remaining value on the remaining value indicator 21. After that, the data of the magnetic stripe of the stored value ticket 204 are read by the reading head 38 and supplied to the CPU 80. The CPU 80 then checks the data recorded on the magnetic stripe to insure they are valid. When the data are valid, the CPU 80 discharges the stored value ticket 204 from the inlet 15 with the gates 17 and 19 are kept open, i.e. allowing the passenger to pass. As a result, the passenger passes through the passage 29 and receives the stored value ticket 204. If the remaining value is judged insufficient at the judgment section 106, the CPU 80 shows the remaining value as a flickering indication at the remaining value indicator 21, and makes an audible alarm from the speaker 108 at the same time. In this case, the CPU 80 closes the gates and sends back the stored value ticket 204 on the carrying route 30 to the inlet 13.

Next, a case is explained wherein a passenger exits the automatic ticket gate unit using ticket 200, pass 202 or stored value ticket 204, and the body 11 is used as an automatic ticket gate unit for exiting service. When a ticket 200 is put into the inlet 15 by a passenger, the ticket 200 is carried on the route 30 in the direction shown by arrow (b). The data of the magnetic stripe of the ticket 200, i.e. issuing station, usage section, usage period (date) and entrance station date are read by the reading head 38, and supplied to the CPU 80. The CPU 80 judges at the judgment section 106 if the ticket is valid using the data including issuing station, usage section, usage period and entrance station. If the ticket is valid, the CPU 80 keeps the gates 17 and 19 open, to allow the passenger to pass. Then, with the thermal head 48, a temperatur lower than that for recording is applied to change the visible status to the transparent status for deleting the date and entrance station data. After that, the ticket 200 on the carrying route 30 is collected in the collecting box 46 using the separation gate 44. As a result, the passenger passes through the passage 29.

When the judgment section 106 judges that the passenger has not paid the full fare, the CPU 80 stops the ticket 200 on the carrying route 30 with the stopper 40 by exciting the solenoid 42, and then sends the ticket back to the inlet 15. It also closes the gate 17 to prevent the passenger from passing through, and guides the passenger with an indicator (not shown) to a fair adjusting window ( or a fair adjusting machine) to make fare adjustment with the ticket 200.

When a pass 202 is put into the inlet 15 by a passenger, the pass 202 is carried on the carrying route 30 in the direction shown by the arrow (b). Then the data on the magnetic stripe 72 of the pass 202, i.e. issuing station, usage section, usage period and entrance station data are read by the reading head 38 and supplied to the CPU 80. The CPU 80 uses the supplied data of issuing station, usage section, usage period and entrans to judge if the passes is valid at the judgment section 106. If the pass is valid, the entrance station data recorded on the magnetic stripe 72 of the pass 202 is deleted with the writing head 36, and by driving the thermal head 48 at a lower temperature than that for the recording. The date and entrance station data recorded in the thermal recording area 64 are deleted by changing the visible status of the entrance station data to the transparent status. After that, the CPU 80 discharges the pass 202 from the inlet 13 with the gate 17 and 19 kept open, allowing the passenger to pass. As a result, the passenger passes the passage 29 and receives the pass 202.

When the judgment at the judgment section 106 is that the full fare is not paid, the CPU 80 stops the pass 202 on the carrying route 30 with the stopper 40 by exciting the solenoid 42 and sends the pass back to the inlet 15. By closing the gate 17, the passenger is prevented from passing. At this time, the CPU 80 guides the passenger with the indicator (not shown) to a fair adjusting window (or a fair adjusting machine) to make fare adjustment with the ticket 200.

When the judgment at the judgment section 106 is that the ticket is being improperly used because it has no entrance data, the CPU 80 stops the pass 202 on the carrying route 30 with the stopper 40 by exciting the solenoid 42 and then sends the ticket back to the inlet 15. By closing the gate 17, the passenger is prevented from passing. In this case, the CPU 80 has an alarm which sounds from the speaker 108, and the alarm is also sent to another device for the station staff.

The staff manually checks that the date and entrance station data are recorded in the thermal recording area 64 of the pass 202 returned to the inlet and whether the data are correctly recorded. The staff deletes the date and entrance data recorded in the thermal recording area 64 by changing the visible status to the transparent status with a device for the staff (not shown), returns the pass 202 to the passenger and permits passage through the passage 29.

If the date and entrance station data are not recorded in the thermal recording area 64, the staff takes a procedure against inappropriate fare payment. Here, whether the date and entrance station data are recorded in the thermal recording area 64 can be confirmed by both the staff and the passenger. Confirmation of inappropriate fare payment not only mechanically, but also visually, prevents trouble between the staff and the passenger.

When a stored value ticket 204 is put into the inlet 15, the stored value ticket 204 is carried on the carrying route 30 in the direction shown by the arrow (b). Then the data on the magnetic stripe of the stored value ticket 204, i.e. the issuing station, usage section, usage period, face value, remaining value and entrance station data, are read by the reading head 38 and supplied to the CPU 80. The CPU 80 uses the supplied data of issued station, usage section, usage period and entrance station data to judge if the ticket is valid. If the stored value ticket is valid, the entrance station data recorded on the magnetic stripe of the stored value ticket 204 is deleted with writing head 36, and the date and entrance station data recorded in the thermal recording area 76 are deleted with the thermal head 48 in the same way as the ticket 200 and the pass 202, by changing the visible status to the transparent status. During the process, the CPU 80 calculates the fare for the section from the entrance station to the station where this device is located using the fare table 102, and deduets the calculated fare from the remaining value. The CPU 80 judges this value after deduction as a new remaining value. This new value is indicated on the value indicator 23, and the data of the magnetic stripe of the stored value ticket 204 are read with the reading head 34, and supplied to the CPU 80. The CPU 80 checks the data recorded (updated) in the magnetic stripe to see if they are valid. If they are valid, the CPU 80 discharges the stored value ticket 204 from the inlet 15 with the gates 17 and 19 kept open, allowing the passenger to pass. At the time of discharge, the CPU 80 prints the new remaining value on the stored value ticket 204 with the printer 32. As a result, the passenger passes through the passage 29 and receives the stored value ticket 204.

If the value of the stored value ticket 204 is not sufficient when the remaining value is judged, the CPU 80 indicates the amount to be adjusted (indicated with -sign) on the value indicator 23. In this case, the CPU 80 stops the stored value ticket 204 on the carrying route 30 with the stopper 40 by exciting the solenoid 42, sends it back to the inlet 15, and then prevents the passenger from passing by closing the gate 17. At this time, the CPU 80 guides the passenger with the indicator (not shown) to go to the fare adjustment window (or the fare adjustment machine) bringing the stored value ticket 204.

When the judgment at the judgment section 106 indicates that no entrance station is recorded, which means an illegal usage of the service, the CPU 80 excites the solenoid 42 to stop the stored value ticket 204 on the carrying route 30 with the stopper 40, sends it back to the inlet 15, and prevents the passenger from passing through by closing the gate 17. At the same time, the CPU 80 has an alarm sounded from the speaker 108 and sends it to the other device for the staff.

Consequently, the staff checks the stored value ticket 204 to see if the date and entrance station data are recorded in the thermal recording area 76. When the data are correctly recorded, the staff deletes the date and entrance station data recorded in the thermal recording area with the device for the staff (now shown), by changing the visible status to the transparent status for deleting of the entrance station data, updates the value, returns the ticket 204 to the passenger and permits the passage through the passage 29.

If date and entrance station data are not recorded in the above thermal recording area 76, the staff takes a procedure against inappropriate fare payment. Here, since both the staff and the passenger can visually check the ticket to see if the date and entrance station data are recorded in the thermal recording area, appropriate fare payment can be checked not only mechanically but also visually, which results in prevention of trouble.

As described above, the present invention is, in a system where a ticket for a certain section with thermal recording area capable of reversible recording and deleting of the information is used for getting on and off, to print the date and entrance station data in the thermal recording area on the ticket to give some visual information when the passenger gets on or enter a gate, so that an inappropriate fare payment can be judged on the basis where the date and entrance station data printed or not in the thermal recording area of the ticket.

With this invention, in appropriate fare payment can be surely prevented, and visual information to prove inappropriate fare payment can be provided.

Though an example where the iudgment of inapprpriate fare payment is performed on the basis of magnetically recorded entrance station data is explained above, a means to read the information in the thermal recording area on the ticket may be provided to judge it by checking the read information or its contents against the recorded entrance station data, magnetically. Thermal recording area and printing data may be overlapped.

The above explanation is for the case where the passenger passes through the automatic ticket gate system for both entering and exiting. However, the invention may be arranged to have the station staff or the passenger print the data in the thermal printing area when getting on, and to have the station staff check the printed data in the thermal recording area other than usual checking of section and period at the time of exiting or ticket inspection on train. In this case, a printing device is needed to print the data in the thermal recording area at the entrance, and at the exit, a deleting device is needed to delete the printed data in the thermal recording area. These devices are easily provided by utilizing the conventionally known thermal printing plate.

**Claims**

1. A portable recording medium at least part of which has a reversible medium on which visible information can be recorded and from which the information can be deleted.

2. A portable recording medium at least part of which has a reversible medium on which visible information can be recorded when the reversible medium is subjected to an elevated temperature and from which the visible information can be deleted by subjecting the reversible medium to an elevated temperature which is lower than that required to record the visible information.

3. A portable recording medium as claimed in claim 1 or 2, including a recording medium for storing data magnetically applied thereto.

4. A portable recording medium as claimed in claim 1 or 2, and which serves as a ticket which gives access to a service system.

5. A portable recording medium as claimed in claim 3, and which serves as a ticket which gives access to a service system.

6. A service system having multiple points of entry and multiple points of exit where at each point of entry apparatus is provided for receiving a ticket as claimed in claim 4 or 5 and to record visible information thereon identifying the point of entry and at each point of exit apparatus is provided for receiving a ticket as claimed in claim 4 or 5 and deleting the visible information from the ticket.

7. A service system as claimed in claim 6, in which the recording means of the apparatus at each point of entry includes means for heating at least the reversible medium on the ticket and the deleting means of the apparatus at each point of exit includes means for heating at least the reversible medium on the ticket but to a temperature which is less than that obtained at the recording means.

8. Apparatus for use at a point of entry of a service system as claimed in claim 6 or 7, including means for heating at least the reversible medium on the ticket to apply visible information thereto which identifies the point of entry.

9. Apparatus for use at a point of exit of a service system as claimed in claim 6 or 7, including means for heating at least the reversible medium on the ticket to delete visible information previously recorded on the ticket.

10. Apparatus for use at a point of entry of a service system as claimed in claim 8 or 9, including a gate which can be closed to deny a user access to the system but which is open when a valid ticket is received at the ticket receiving means.

11. Apparatus for use at a point of exit of a service system as claimed in claim 8 or 9, including a gate which is closed to prevent exit of a user from the system but which is opened when a valid ticket is received at the ticket receiving means.

12. Apparatus as claimed in claim 10 or 11, in which access to the system and exit from the system is permitted through a common passageway which is controlled by the or each gate.

13. Apparatus as claimed in claim 10, 11 or 12, including means for magnetically recording data on to a ticket as claimed in claim 5.

FIG. 1

FIG.2

FIG.3

202    54    52

58

COMMUTATION PASS

Astation ←→ Bstation
56 →MAY    10, 1989
64

valid for 3 months from
issue date Jan.11,1989
Mr. T. Toshiba  Age 18

62    60

# FIG. 4

202    54    52

COMMUTATION PASS

58 Astation ←→ Bstation
→MAY    10, 1989
56
MAR.10,'89 Astation  64

valid for 3 months from
issue date Jan.11,1989
Mr. T. Toshiba  Age 18

62    60

# FIG. 5

F I G. 6

F I G. 7

FIG.8

FIG.9